# EUROPÄISCHE PATENTSCHRIFT

(11) **EP 1 999 210 B1**
(45) Veröffentlichungstag und Bekanntmachung des Hinweises auf die Patenterteilung: **14.07.2010**
(21) Anmeldenummer: 07723141.3
(22) Anmeldetag: 09.03.2007
(51) Int. Cl.: C08L 69/00, C08K 3/38, C08K 3/34, C08K 5/523, C08L 51/04

(54) **FLAMMGESCHÜTZTE SCHLAGZÄHMODIFIZIERTE POLYCARBONAT-ZUSAMMENSETZUNGEN**
FLAMEPROOF IMPACT-RESISTANCE MODIFIED POLYCARBONATE COMPOSITIONS
COMPOSITIONS DE POLYCARBONATE IGNIFUGÉES À RÉSILIENCE MODIFIÉE

(30) Priorität: 22.03.2006 DE 102006012990
(43) Veröffentlichungstag der Anmeldung: 10.12.2008
(73) Patentinhaber: Bayer MaterialScience AG, 51368 Leverkusen (DE)
(72) Erfinder: BUCHHOLZ, Vera, 50823 Köln (DE); WENZ, Eckhard, 50679 Köln (DE); ECKEL, Thomas, 41540 Dormagen (DE); THUERMER, Burkhard, 53332 Bornheim (DE); WITTMANN, Dieter, 51375 Leverkusen (DE)
(86) Internationale Anmeldenummer: PCT/EP2007/002061
(87) Internationale Veröffentlichungsnummer: WO 2007/107252

(56) Entgegenhaltungen:
- DE-A1- 10 010 941
- DE-A1- 19 941 823
- JP-A- 8 208 972
- US-B1- 6 448 324

## Beschreibung

Die vorliegende Erfindung betrifft schlagzähmodifizierte Polycarbonat-Zusammensetzungen, die erhöhte brandschutztechnische Anforderungen erfüllen, ein Verfahren zu ihrer Herstellung und ihre Verwendung zur Herstellung von Formkörpern.

In JP-A 111 997 68 werden PC/ABS-Blends beschrieben, die mit monomeren und oligomeren Phosphorsäureestern flammwidrig ausgerüstet sind, wobei die Flammwidrigkeit durch Zusatz eines anorganischen Füllstoffs, wie z.B. Talk deutlich verbessert wird. Die hierdurch realisierbare Reduktion des Phosphatgehalts bei unveränderter Flammwidrigkeit ist jedoch unzureichend, um die für Extrusionsanwendungen nötigen Schmelzeviskositäten zu erreichen. Des Weiteren wirkt sich der anorganische Füllstoff im Allgemeinen nachteilig auf die mechanischen Eigenschaften, insbesondere auf die Zähigkeit des Polymerblends aus.

US-A 5 849 827 und WO 99/07782 beschreiben PC/ABS-Formmassen, die mit Resorcinolbasierendem bzw. Bisphenol-A-basierendem Oligophosphat flammwidrig ausgerüstet sind, wobei die Nachbrennzeiten durch Zusatz nanoskaliger anorganischer Materialien in kleinen Konzentrationen deutlich reduziert werden. Auch die hier beschriebenen Formmassen besitzen aber eine für Extrusionsanwendungen unzureichende Schmelzestabilität.

WO 99/57198 beschreibt PC/ABS-Formmassen, die mit einem Resorcinol-abgeleiteten Oligophosphat flammwidrig ausgerüstet sind und sich durch einen sehr niedrigen Teflongehalt von nur 0,1 Gew.-% - entsprechend einem Fluorgehalt von 0,076 % - auszeichnen. In den Formmassen kommen lineare und verzweigte Polycarbonate mit hohem Molekulargewicht (31,000 bzw. 32,000 g/mol) zum Einsatz. Die rheologischen Eigenschaften der beschriebenen Formmassen (MVR) lassen eine Verarbeitung im Extrusionsverfahren zu. Allerdings zeichnen sich die Formmassen durch eine Schwäche im ESC-Verhalten und in der Wärmeformbeständigkeit aus, insbesondere dann wenn genügend Flammschutzmittel eingesetzt wird, um eine ausreichende Flammwidrigkeit auch bei dünnen Wandstärken zu erzielen.

US 2002/0077417 A1 offenbart flammwidrige Polycarbonat-Harzzusammensetzungen aus verzweigtem Polycarbonat, einem Silikon/Acrylat-Komposite-Pfropfcopolymer, oligomeren Phosphorsäureester, Polytetrafluorethylen und ggf. Talk. Oligomere Phosphorsäureester vom BDP-Typ werden nicht offenbart.

WO 02/100948 A1 offenbart thermoplastische Formmassen enthaltend verzweigtes Polycarbonat, Pfropfpolymer, Talk mit einer mittleren Teilchengröße unter 1000 nm sowie gegebenenfalls Oligophosphate, Vinylcopolymerisate und Antidrippingmittel. WO 01/48074 A1 offenbart thermoplastische Formmassen enthaltend verzweigtes Polycarbonat, Pfropfpolymer, Talk einer besonderen Reinheit sowie gegebenenfalls Oligophosphate, Vinylcopolymerisate und Antidrippingmittel.

EP 0 675 001 A1 offenbart Zusammensetzungen enthaltend ein thermoplastisches Harz (wie beispielsweise Polycarbonat) und wasserabspaltende Verbindungen, wobei gegebenenfalls als weitere Komponenten phosphorhaltige Flammschutzmittel, Talk, Acylnitil-Butadien-StyrolCopolymer (ABS) und Styrol-Acrylnitril-Copolymer (SAN) enthalten sein können. Diese Harzzusammensetzungen sind für Beschriftung mittels Laser geeignet. Entsprechende Zusammensetzungen enthaltend Silicon(acrylat)-Pfropfpolymere sind nicht offenbart.

Aufgabe der vorliegenden Erfindung war die Bereitstellung einer chlor- und bromfreien Formmasse, welche sowohl besonders hohe Flammwidrigkeitsanforderungen wie die Anforderungen an Materialien in amerikanischen Schienenfahrzeugen (Docket 90 A) erfüllt und aufgrund einer hohen Schmelzestabilität im Extrusionsverfahren verarbeitet werden kann. Insbesondere darf die Formmasse gemäß Docket 90 A in ASTM E 162 kein brennendes Abtropfen zeigen und muss einen Flammenausbreitungsindex Is von kleiner als 35 aufweisen sowie gemäß ASTM E 662 eine niedrige Rauchgasdichte (Ds 1,5 min < 100 und Ds 4 min < 200) aufweisen. Die Formmassen sollen gleichzeitig einen Zug-E-Modul von mindestens 3500 N/mm² aufweisen, um eine ausreichende mechanische Festigkeit zu gewährleisten.

Es wurde überraschend gefunden, dass Zusammensetzungen enthaltend
A) 60 - 85, besonders bevorzugt 65 - 78 Gew.-Teile verzweigtes aromatisches Polycarbonat und/oder verzweigtes aromatisches Polyestercarbonat,
B) 1 - 25, bevorzugt 2 - 9, besonders bevorzugt 4 - 8, ganz besonders bevorzugt 4,7 - 6,6 Gew.-Teile eines Pfropfpolymerisates enthaltend eine oder mehrere Pfropfgrundlagen (B.2) ausgewählt aus der Gruppe der Silikonkautschuke (B.2.1) und Silikonacrylat-Kautschuke (B.2.2),
C) 10 - 15, besonders bevorzugt 10 - 12 Gew.-Teile Talk,
D) 0,4 - 20, bevorzugt 6 - 17, besonders bevorzugt 8 - 12 Gew.-Teile phosphorhaltiges Flammschutzmittel,
E) 0,5 - 20, bevorzugt 1 - 10, besonders bevorzugt 1 - 6, ganz besonders bevorzugt 2 - 4 Gew.-Teile einer oder mehrerer anorganischer Borverbindungen
F) 0 - 3, bevorzugt 0,01 - 1, besonders bevorzugt 0,1 - 0,6 Gew.-Teile Antitropfmittel,
wobei alle Gewichtsteilangaben in der vorliegenden Anmeldung so normiert sind, dass die Summe der Gewichtsteile aller Komponenten in der Zusammensetzung 100 ergeben, das gewünschte Eigenschaftsprofil aufweisen.

### Komponente A

Erfindungsgemäß geeignete verzweigte aromatische Polycarbonate und/oder verzweigte aromatische Polyestercarbonate gemäß Komponente A sind literaturbekannt oder nach literaturbekannten Verfahren herstellbar (zur Herstellung aromatischer Polycarbonate siehe beispielsweise Schnell, "Chemistry and Physics of Polycarbonates", Interscience Publishers, 1964 sowie die DE-AS 1 495 626, DE-A 2 232 877, DE-A 2 703 376, DE-A 2 714 544, DE-A 3 000 610, DE-A 3 832 396; zur Herstellung aromatischer Polyestercarbonate z.B. DE-A 3 077 934).

Die Herstellung aromatischer Poly(ester)carbonate erfolgt z.B. durch Umsetzung von Diphenolen mit Kohlensäurehalogeniden, vorzugsweise Phosgen, und/oder mit aromatischen Dicarbonsäuredihalogeniden, vorzugsweise Benzoldicarbonsäuredihalogeniden, nach dem Phasengrenzflächenverfahren, gegebenenfalls unter Verwendung von Kettenabbrechern, beispielsweise Monophenolen und unter Verwendung von trifunktionellen oder tetrafunktionellen phenolischen Verzweigern, die als aktive funktionelle Gruppen auch Amin-Funktionalitäten enthalten können, wobei die Verzweigung in diesem Fall durch Amidbindungen zustande kommt. Als Verzweiger geeignet sind beispielsweise Triphenole oder Tetraphenole und in bevorzugter Weise auch solche phenolischen Verzweiger mit mindestens drei für eine Kondensationsreaktion geeignete funktionelle Gruppen mit abgestufter Reaktivität. Auch als Verzweiger geeignet ist 1,1,1-tris-(p-Hydroxyphenyl)ethan.

Besonders bevorzugt kommt Isatinbiscresol als Verzweiger zum Einsatz.

Die Verzweiger werden in einer Menge von 0,01 bis 5 mol-%, bevorzugt von 0,02 bis 2 mol-%, insbesondere von 0,05 bis 1 mol-%, besonders bevorzugt von 0,1 bis 0,5 mol-%, bezogen auf die Summe aus Diphenol und Verzweiger im Poly(ester)carbonat eingesetzt.

Erfindungsgemäß geeignete verzweigte Polycarbonate lassen sich auch nach dem bekannten Schmelzepolymerisationsverfahren durch Umsetzung von diphenolischen Verbindungen mit Diphenylcarbonat unter Verwendung o.g. Verzweiger und Kettenabbrecher herstellen.

Diphenole zur Herstellung der verzweigten aromatischen Polycarbonate und/oder aromatischen Polyestercarbonate sind vorzugsweise solche der Formel (I) 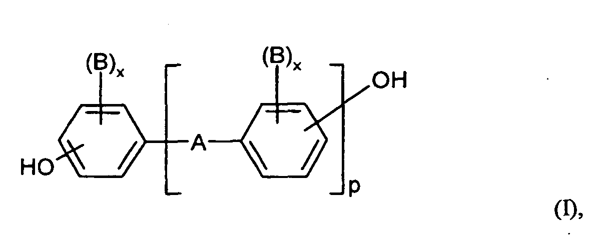 wobei
- A: eine Einfachbindung, C₁ bis C₅-Alkylen, C₂ bis C₅-Alkyliden, C₅ bis C₆-Cycloalkyliden, -O-, - SO-, -CO-, -S-, -SO₂-, C₆ bis C₁₂-Arylen, an das weitere aromatische gegebenenfalls Heteroatome enthaltende Ringe kondensiert sein können, oder ein Rest der Formel (II) oder (III) 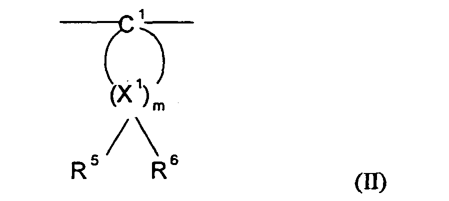 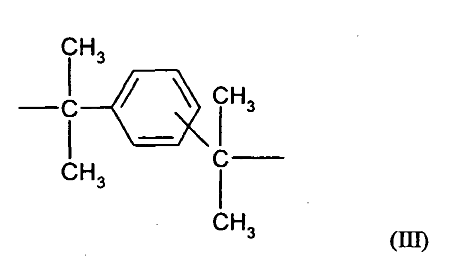
- B: jeweils C₁ bis C₁₂-Alkyl, vorzugsweise Methyl, Halogen, vorzugsweise Chlor und/oder Brom
- x: jeweils unabhängig voneinander 0, 1 oder 2,
- p: 1 oder 0 sind, und
- R⁵ und R⁶: für jedes X¹ individuell wählbar, unabhängig voneinander Wasserstoff oder C₁ bis C₆-Alkyl, vorzugsweise Wasserstoff, Methyl oder Ethyl,
- X¹: Kohlenstoff und
- m: eine ganze Zahl von 4 bis 7, bevorzugt 4 oder 5 bedeuten, mit der Maßgabe, dass an mindestens einem Atom X¹, R⁵ und R⁶ gleichzeitig Alkyl sind.

Bevorzugte Diphenole sind Hydrochinon, Resorcin, Dihydroxydiphenole, Bis-(hydroxyphenyl)-C₁-C₅-alkane, Bis-(hydroxyphenyl)-C₅-C₆-cycloalkane, Bis-(hydroxyphenyl)-ether, Bis-(hydroxyphenyl)-sulfoxide, Bis-(hydroxyphenyl)-ketone, Bis-(hydroxyphenyl)-sulfone und α,α-Bis-(hydroxyphenyl)-diisopropyl-benzole sowie deren kernbromierte und/oder kernchlorierte Derivate.

Besonders bevorzugte Diphenole sind 4,4'-Dihydroxydiphenyl, Bisphenol-A, 2,4-Bis(4-hydroxyphenyl)-2-methylbutan, 1,1-Bis-(4-hydroxyphenyl)-cyclohexan, 1,1-Bis-(4-hydroxyphenyl)-3.3.5-trimethylcyclohexan, 4,4'-Dihydroxydiphenylsulfid, 4,4'-Dihydroxydiphenylsulfon sowie deren di- und tetrabromierten oder chlorierten Derivate wie beispielsweise 2,2-Bis(3-Chlor-4-hydroxyphenyl)-propan, 2,2-Bis-(3,5-dichlor-4-hydroxyphenyl)-propan oder 2,2-Bis-(3,5-dibrom-4-hydroxyphenyl)propan. Insbesondere bevorzugt ist 2,2-Bis-(4-hydroxyphenyl)propan (Bisphenol-A).

Es können die Diphenole einzeln oder als beliebige Mischungen eingesetzt werden. Die Diphenole sind literaturbekannt oder nach literaturbekannten Verfahren erhältlich.

Für die Herstellung der thermoplastischen, aromatischen verzweigten Polycarbonate geeignete Kettenabbrecher sind beispielsweise Phenol, p-Chlorphenol, p-tert.-Butylphenol oder 2,4,6-Tribromphenol, aber auch langkettige Alkylphenole, wie 4-(1,3-Tetramethylbutyl)-phenol gemäß DE-A 2 842 005 oder Monoalkylphenol bzw. Dialkylphenole mit insgesamt 8 bis 20 C-Atomen in den Alkylsubstituenten, wie 3,5-di-tert.-Butylphenol, p-iso-Octylphenol, p-tert.-Octylphenol, p-Dodecylphenol und 2-(3,5-Dimethylheptyl)-phenol und 4-(3,5-Dimethylheptyl)-phenol. Die Menge an einzusetzenden Kettenabbrechern beträgt im allgemeinen zwischen 0,5 mol-%, und 10 mol-%, bezogen auf die Molsumme der jeweils eingesetzten Diphenole.

Als Kettenabbrecher für die Herstellung der aromatischen Polyestercarbonate kommen außer den bereits genannten Monophenolen noch deren Chlorkohlensäureester sowie die Säurechloride von aromatischen Monocarbonsäuren, die gegebenenfalls durch C₁ bis C₂₂-Alkylgruppen oder durch Halogenatome substituiert sein können, sowie aliphatische C₂ bis C₂₂-Monocarbonsäurechloride in Betracht.

Die Menge an Kettenabbrechern beträgt jeweils 0,1 bis 10 mol-%, bezogen im Falle der phenolischen Kettenabbrecher auf Mole Diphenole und im Falle von Monocarbonsäurechlorid-Kettenabbrecher auf Mole Dicarbonsäuredichloride.

Die aromatischen Polyestercarbonate können auch aromatische Hydroxycarbonsäuren eingebaut enthalten.

In den thermoplastischen, aromatischen Polyestercarbonaten kann der Anteil an Carbonatstruktureinheiten beliebig variieren. Vorzugsweise beträgt der Anteil an Carbonatgruppen bis zu 100 mol-%, insbesondere bis zu 80 mol-%, besonders bevorzugt bis zu 50 mol-%, bezogen auf die Summe an Estergruppen und Carbonatgruppen. Sowohl der Ester- als auch der Carbonatanteil der aromatischen Polyestercarbonate kann in Form von Blöcken oder statistisch verteilt im Polykondensat vorliegen.

Die thermoplastischen, aromatischen verzweigten Polycarbonate und Polyestercarbonate können allein oder im beliebigen Gemisch eingesetzt werden. Bevorzugte erfindungsgemäße Zusammensetzungen sind frei von linearen Polycarbonaten und Polyestercarbonaten.

Die relativen Lösungsviskositäten der erfindungsgemäß geeigneten Poly(ester)carbonate liegen im Bereich von 1,20 bis 1,50, bevorzugt von 1,24 bis 1,40, insbesondere von 1,25 bis 1,35, gemessen in CH₂Cl₂ als Lösungsmittel bei 25°C und in einer Konzentration von 0,5 g/100 ml.

### Komponente B

Die Komponente B umfasst ein oder mehrere Pfropfpolymerisate von
- B.1: 5 bis 95, vorzugsweise 10 bis 90 Gew.-% eines oder mehrerer Vinylmonomeren auf
- B.2: 95 bis 5, vorzugsweise 90 bis 10 Gew.-% einer oder mehrerer Pfropfgrundlagen ausgewählt aus der Gruppe der Silikonkautschuke (B.2.1) und Silikonacrylat-Kautschuke (B.2.2).

Die Pfropfcopolymerisate B werden durch radikalische Polymerisation, z.B. durch Emulsions-, Suspensions-, Lösungs- oder Massepolymerisation, vorzugsweise durch Emulsions- oder Massepolymerisation hergestellt.

Geeignete Monomere B.1 sind Vinylmonomere wie Vinylaromaten und/oder kernsubstituierte Vinylaromaten (wie Styrol, α-Methylstyrol, p-Methylstyrol, p-Chlorstyrol), Methacrylsäure-(C₁-C₈)-Alkylester (wie Methylmethacrylat, Ethylmethacrylat, 2-Ethylhexylmethacrylat, Allylmethacrylat), Acrylsäure-(C₁-C₈)-Alkylester (wie Methylacrylat, Ethylacrylat, n-Butylacrylat, t-Butylacrylat), organische Säuren (wie Acrylsäure, Methacrylsäure), und/oder Vinylcyanide (wie Acrylnitril und Methacrylnitril), und/oder Derivate (wie Anhydride und Imide) ungesättigter Carbonsäuren (beispielsweise Maleinsäureanhydrid und N-Phenyl-Maleinimid). Diese Vinylmonomere können alleine oder in Mischungen von mindestens zwei Monomeren verwendet werden.

Bevorzugte Monomere B.1 sind ausgewählt aus mindestens einem der Monomere Styrol, α-Methylstyrol, Methylmethacrylat, n-Butylacrylat und Acrylnitril. Besonders bevorzugt wird als Monomer B.1 Methylmethacrylat eingesetzt.

Die Glasübergangstemperatur der Pfropfgrundlage B.2 beträgt < 10°C, vorzugsweise < 0°C, besonders bevorzugt < -20°C. Die Pfropfgrundlage B.2 hat im allgemeinen eine mittlere Teilchengröße (d₅₀-Wert) von 0,05 bis 10 µm, vorzugsweise 0,06 bis 5 µm, besonders bevorzugt 0,08 bis 1 µm.

Die mittlere Teilchengröße d₅₀ ist der Durchmesser, oberhalb und unterhalb dessen jeweils 50 Gew.-% der Teilchen liegen. Er kann mittels Ultrazentrifugenmessung (W. Scholtan, H. Lange, Kolloid-Z. und Z. Polymere 250 (1972), 782-796) bestimmt werden.

Geeignete Silikonkautschuke gemäß B.2.1 sind Silikonkautschuke mit pfropfaktiven Stellen, deren Herstellungsmethode beispielsweise in US 2891920, US 3294725, DE-OS 3 631 540, EP 249964, EP 430134 und US 4888388 beschrieben wird.

Der Silikonkautschuk gemäß B.2.1 wird bevorzugt durch Emulsionspolymerisation hergestellt, bei der Siloxan-Monomerbausteine, Vemetzungs- oder Verzweigungsmittel (IV) und gegebenenfalls Pfropfmittel (V) eingesetzt werden.

Als Siloxan-Monomerbausteine werden beispielsweise und bevorzugt Dimethylsiloxan oder cyclische Organosiloxane mit wenigstens 3 Ringgliedern, vorzugsweise 3 bis 6 Ringgliedern, wie beispielsweise und bevorzugt Hexamethylcyclotrisiloxan, Octamethylcyclotetrasiloxan, Decamethylcyclopentasiloxan, Dodecamethylcyclohexasiloxan, Trimethyl-triphenyl-cyclotrisiloxane, Tetramethyl-tetraphenyl-cyclotetrasiloxane, Octaphenylcyclotetrasiloxan eingesetzt.

Die Organosiloxan-Monomere können allein oder in Form von Mischungen mit 2 oder mehr Monomeren eingesetzt werden. Der Silikonkautschuk enthält vorzugsweise nicht weniger als 50 Gew.-% und besonders bevorzugt nicht weniger als 60 Gew.-% Organosiloxan, bezogen auf das Gesamtgewicht der Silikonkautschuk-Komponente.

Als Vemetzungs- oder Verzweigungsmittel (IV) werden vorzugsweise silanbasierende Vernetzungsmittel mit einer Funktionalität von 3 oder 4, besonders bevorzugt 4, verwendet. Beispielhaft und vorzugsweise seien genannt: Trimethoxymethylsilan, Triethoxyphenylsilan, Tetramethoxysilan, Tetraethoxysilan, Tetra-n-propoxysilan und Tetrabutoxysilan. Das Vernetzungsmittel kann allein oder in Mischung von zwei oder mehreren eingesetzt werden. Besonders bevorzugt ist Tetraethoxysilan.

Das Vernetzungsmittel wird in einem Mengenbereich zwischen 0,1 und 40 Gew.%, bezogen auf das Gesamtgewicht der Silikonkautschuk-Komponente, eingesetzt. Die Menge an Vernetzungsmittel wird so gewählt, dass der Quellungsgrad des Silikonkautschuks, gemessen in Toluol, zwischen 3 und 30 liegt, bevorzugt zwischen 3 und 25, und besonders bevorzugt zwischen 3 und 15. Der Quellungsgrad ist definiert als das Gewichtsverhältnis zwischen der Menge Toluol, die durch den Silikonkautschuk absorbiert wird, wenn er mit Toluol bei 25°C gesättigt wird, und der Menge an Silikonkautschuk im getrockneten Zustand. Die Ermittlung des Quelleungsgrades ist im Detail in EP 249964 beschrieben.

Wenn der Quellungsgrad geringer als 3 ist, d.h. wenn der Gehalt an Vernetzungsmittel zu hoch ist, zeigt der Silikonkautschuk nicht ausreichend Kautschukelastizität. Wenn der Quellungsindex größer als 30 ist, kann der Silikonkautschuk keine Domänenstruktur im Matrixpolymer ausbilden und daher auch keine Schlagzähigkeit verbessern, der Effekt wäre dann ähnlich einer einfachen Zugabe von Polydimethylsiloxan.

Tetrafunktionelle Vernetzungsmittel sind bevorzugt gegenüber trifunktionellen, weil dann der Quellungsgrad einfacher kontrollierbarer innerhalb der oben beschriebenen Grenzen ist.

Als Pfropfmittel (V) geeignet sind Verbindungen, die fähig sind, Strukturen der folgenden Formeln zu bilden:

CH₂=C(R²)-COO-(CH₂)ₚ-SiR¹ₙO(_{3-n)/2} (V-1)

CH₂=CH-SiR¹ₙO(_{3-n)/2} (V-2)

oder

HS-(CH₂)ₚ-SiR¹ₙO_{(3-n)/2} (V-3),

wobei
- R¹: für C₁-C₄-Alkyl, vorzugsweise Methyl, Ethyl oder Propyl, oder Phenyl,
- R²: für Wasserstoff oder Methyl stehen,
- n: 0, 1 oder 2 und
- p: eine ganze Zahl von 1 bis 6 bedeuten.

Acryloyl- oder Methacryloyloxysilane sind besonders geeignet, die o.g. Struktur (V-1) zu bilden, und haben eine hohe Pfropfeffizienz. Dadurch wird eine effektive Bildung der Pfropfketten gewährleistet, und somit die Schlagzähigkeit der resultierenden Harzzusammensetzung begünstigt.

Beispielhaft und bevorzugt seien genannt: β-Methacryloyloxy-ethyldimethoxymethyl-silan, γ-Methacryloyloxy-propylmethoxydimethyl-silan, γ-Methacryloyloxy-propyldimethoxymethyl-silan, γ- Methacryloyloxy-propyltrimethoxy-silan, γ-Methacryloyloxy-propylethoxydiethyl-silan, γ-Methacryloyloxy-propyldiethoxymethyl-silan, δ-Methacryloyl-oxy-butyldiethoxymethyl-silane oder Mischungen hieraus.

Bevorzugt werden 0 bis 20 Gew.-% Pfropfmittel bezogen auf das Gesamtgewicht des Silikonkautschuks eingesetzt.

Der Silikonkautschuk kann durch Emulsionspolymerisation hergestellt werden, wie beispielsweise in US 2891920 und US 3294725 beschrieben. Der Silikonkautschuk fällt dabei in Form eines wäßrigen Latex an. Dafür wird ein Gemisch enthaltend Organosiloxan, Vernetzungsmittel und gegebenenfalls Pfropfmittel unter Scherung mit Wasser vermischt, beispielsweise durch einen Homogenisator, in Gegenwart eines Emulgators auf Sulfonsäurebasis wie z.B. Alkylbenzolsulfonsäure oder Alkylsulfonsäure, wobei die Mischung zum Silikonkautschuklatex auspolymerisiert. Besonders geeignet ist eine Alkylbenzolsulfonsäure, da sie nicht nur als Emulgator, sondern auch als Polymerisationsinitiator wirkt. In diesem Fall ist eine Kombination der Sulfonsäure mit einem Metallsalz einer Alkylbenzolsulfonsäure oder mit einem Metallsalz einer Alkylsulfonsäure günstig, weil dadurch das Polymer während der späteren Pfropfpolymerisation stabilisiert wird.

Nach der Polymerisation wird die Reaktion beendet, indem die Reaktionsmischung durch Zugabe einer wäßrigen alkalischen Lösung neutralisiert wird, z.B. durch Zugabe einer wäßrigen Natriumhydroxid, Kaliumhydroxid oder Natriumcarbonat-Lösung.

Als Pfropfgrundlagen B.2 sind erfindungsgemäß auch Silikonacrylat-Kautschuke (B.2.2) geeignet. Diese Silikonacrylat-Kautschuke sind Komposit-Kautschuke mit pfropfaktiven Stellen enthaltend 10 - 90 Gew.-% Silikonkautschuk-Anteil und 90 bis 10 Gew.-% Polyalkyl(meth)acrylatkautschuk-Anteil, wobei sich die beiden genannten Kautschuk-Komponenten im Komposit-Kautschuk gegenseitig durchdringen, so daß sie sich nicht wesentlich voneinander trennen lassen.

Wenn im Komposit-Kautschuk der Anteil der Silikonkautschuk-Komponente zu hoch ist, haben die fertigen Harzzusammensetzungen nachteilige Oberflächeneigenschaften und eine verschlechterte Einfärbbarkeit. Wenn dagegen der Anteil der Polyalkyl(meth)acrylatkautschuk-Komponente im Komposit-Kautschuk zu hoch ist, wird die Schlagzähigheit der fertigen Harzzusammensetzung nachteilig beeinflußt).

Silikonacrylat-Kautschuke sind bekannt und beispielsweise beschrieben in US 5,807,914, EP 430134 und US 4888388.

Geeignete Silikonkautschuk-Komponenten der Silikonacrylat-Kautschuke gemäß B.2.2 sind solche, wie bereits unter B.2.1 beschrieben.

Geeignete Polyalkyl(meth)acrylatkautschuk-Komponenten der Silikonacrylat-Kautschuke gemäß B.2.2 können hergestellt werden aus Methacrylsäurealkylestern und/oder Acrylsäurealkylestern, einem Vernetzungsmittel (VI) und einem Pfropfmittel (VII). Hierbei sind beispielhafte und bevorzugte Methacrylsäurealkylester und/oder Acrylsäurealkylester die C₁ bis C₈-Alkylester, beispielsweise Methyl-, Ethyl-, n-Butyl-, t-Butyl-, n-Propyl-, n-Hexyl-, n-Octyl-, n-Lauryl- und 2-Ethylhexylester; Halogenalkylester, vorzugsweise Halogen-C₁-C₈-alkylester, wie Chlorethylacrylat sowie Mischungen dieser Monomeren. Besonders bevorzugt ist n-Butylacrylat.

Als Vernetzungsmittel (VI) für die Polyalkyl(meth)acrylatkautschuk-Komponente des Silikonacrylat-Kautschuks können Monomere mit mehr als einer polymerisierbaren Doppelbindung eingesetzt werden. Bevorzugte Beispiele für vernetzende Monomere sind Ester ungesättigter Monocarbonsäuren mit 3 bis 8 C-Atomen und ungesättigter einwertiger Alkohole mit 3 bis 12 C-Atomen, oder gesättigter Polyole mit 2 bis 4 OH-Gruppen und 2 bis 20 C-Atomen, wie Ethylenglykoldimethacrylat, Propylenglykoldimethacrylat, 1,3-Butylenglykoldimethacrylat und 1,4-Butylenglykoldimethacrylat. Die Vernetzungsmittel können alleine oder in Gemischen aus mindestsens zwei Vernetzungsmitteln verwendet werden.

Beispielhafte und bevorzugte Pfropfmittel (VII) sind Allylmethacrylat, Triallylcyanurat, Triallylisocyanurat oder Mischungen hieraus. Allylmethacrylat kann auch als Vernetzungsmittel (VI) eingesetzt werden. Die Pfropfmittel können alleine oder in Gemischen aus mindestens zwei Pfropfmitteln verwendet werden.

Die Menge an Vernetzungsmittel (VI) und Pfropfmittel (VII) beträgt 0,1 bis 20 Gew.%, bezogen auf das gesamte Gewicht der Polyalkyl(meth)acrylatkautschuk-Komponente des Silikonacrylat-Kautschuks.

Der Silikonacrylat-Kautschuk wird hergestellt, indem zunächst der Silikonkautschuk gemäß B.2.1 als wäßriger Latex hergestellt wird. Dieser Latex wird anschließend mit den zu verwendenden Methacrylsäurealkylestern und/oder Acrylsäurealkylestern, dem Vernetzungsmittel (VI) und dem Pfropfmittel (VII) angereichert, und eine Polymerisation wird durchgeführt. Bevorzugt ist eine radikalisch initiierte Emulsionspolymerisation, beispielsweise durch einen Peroxid-, einen Azo- oder Redoxinitiator. Besonders bevorzugt ist die Verwendung eines Redoxinitiatorsystems, speziell eines Sulfoxylat-Initiatorsystems hergestellt durch Kombiniation von Eisensulfat, Dinatriumethylendiamintetraacetat, Rongalit und Hydroperoxid.

Das Pfropfmittel (V), das bei der Herstellung des Silikonkautschuks verwendet wird, führt dabei dazu, daß der Polyalkyl(meth)acrylatkautschuk-Anteil kovalent an den Silikonkautschuk-Anteil angebunden wird. Bei der Polymerisation durchdringen sich die beiden Kautschuk-Komponenten gegenseitig und bilden so den Komposit-Kautschuk, der sich nach der Polymerisation nicht mehr in seine Bestandteile aus Silikonkautschuk-Komponente und Polyalkyl(meth)acrylatkautschuk-Komponente trennen läßt.

Zur Herstellung der als Komponente B) genannten Silikon(acrylat)-Pfropfkautschuke B werden die Monomere B.1 auf die Kautschuk-Grundlage B.2. aufgepfropft.

Dabei können die beispielsweise in EP 249964, EP 430134 und US 4888388 beschriebenen Polymerisationsmethoden angewendet werden.

Beispielsweise erfolgt die Pfropfpolymerisation nach folgender Polymerisationsmethode: In einer ein- oder mehrstufigen radikalisch initiierten Emulsionspolymerisation werden die gewünschten Vinylmonomere B.1 auf die Pfropfgrundlage, die als wässriger Latex vorliegt, aufpolymerisiert. Die Pfropfeffizienz soll dabei möglichst hoch sein und beträgt bevorzugt größer oder gleich 10%. Die Pfropfeffizienz hängt maßgeblich vom verwendeten Pfropfmittel (V) bzw. (VII) ab. Nach der Polymerisation zum Silikon(acrylat)-Pfropfkautschuk wird der wäßrige Latex in heißes Wasser gegeben, in dem zuvor Metallsalze gelöst wurden, wie z.B. Calciumchlorid oder Magnesiumsulfat. Dabei koaguliert der Silikon(acrylat)-Pfropfkautschuk und kann anschließend separiert werden.

Die als Komponente B) genannten Methacrylsäurealkylester- und Acrylsäurealkylester-Pfropfkautschuke sind kommerziell erhältlich. Beispielhaft seien genannt: Metablen^{®} SX 005 und Metablen^{®} SRK 200 der Mitsubishi Rayon Co. Ltd.

### Komponente C

Unter Talk wird ein natürlich vorkommender oder synthetisch hergestellter Talk verstanden.

Reiner Talk hat die chemische Zusammensetzung 3 MgO • 4 SiO₂ • H₂O und somit einen MgO-Gehalt von 31,9 Gew.-%, einen SiO₂-Gehalt von 63,4 Gew.-% und einen Gehalt an chemisch gebundenem Wasser von 4,8 Gew.-%. Es handelt sich um ein Silikat mit Schichtstruktur.

Natürlich vorkommende Talkmaterialien besitzen im allgemeinen nicht die oben aufgeführte Idealzusammensetzung, da sie durch partiellen Austausch des Magnesiums durch andere Elemente, durch partiellen Austausch von Silizium, durch z.B. Aluminium und/oder durch Verwachsungen mit anderen Mineralien wie z.B. Dolomit, Magnesit und Chlorit verunreinigt sind.

Die speziellen Talksorten im erfindungsgemäßen Sinne zeichnen sich aus durch eine besonders hohe Reinheit, gekennzeichnet durch einen MgO-Gehalt von 28 bis 35 Gew.-%, bevorzugt 30 bis 33 Gew.-%, besonders bevorzugt 30,5 bis 32 Gew.-% und einen SiO₂-Gehalt von 55 bis 65 Gew.-%, bevorzugt 58 bis 64 Gew.-%, besonders bevorzugt 60 bis 62,5 Gew.-%. Bevorzugte Talktypen zeichnen sich des Weiteren durch einen Al₂O₃-Gehalt von kleiner als 5 Gew.-%, besonders bevorzugt kleiner als 1 Gew.-%, insbesondere kleiner als 0,7 Gew.-%, aus.

Eine kommerziell verfügbare Talktype, die dieser Definition entspricht, ist z.B. Luzenac^{®} A3 der Firma Luzenac Naintsch Mineralwerke GmbH (Graz, Österreich).

Talktypen im nicht erfindungsgemäßen Sinne sind z.B. Luzenac SE-Standard, Luzenac SE-Super, Luzenac SE-Micro sowie Luzenac ST 10, 15, 20, 30 und 60, die allesamt von der Firma Luzenac Naintsch Mineralwerke GmbH vertrieben werden.

Vorteilhaft ist insbesondere der Einsatz des erfindungsgemäßen Talkes in Form von feinvermahlenen Typen mit einer mittleren Teilchengröße d₅₀ von 0,1 bis 20 µm, bevorzugt 0,2 bis 10 µm, besonders bevorzugt 1,1 bis 5 µm, ganz besonders bevorzugt 1,15 bis 2,5 µm.

Der Talk kann oberflächenbehandelt, z.B. silanisiert sein, um eine bessere Verträglichkeit mit dem Polymer zu gewährleisten. Im Hinblick auf die Verarbeitung und Herstellung der Formmassen ist auch der Einsatz kompaktierter Talks vorteilhaft.

### Komponente D

Phosphorhaltige Flammschutzmittel (D) im erfindungsgemäßen Sinne sind bevorzugt ausgewählt aus den Gruppen der Mono- und oligomeren Phosphor- und Phosphonsäureester, Phosphonatamine und Phosphazene, wobei auch Mischungen von mehreren Komponenten ausgewählt aus einer oder verschiedenen dieser Gruppen als Flammschutzmittel zum Einsatz kommen können. Auch andere hier nicht speziell erwähnte halogenfreie Phosphorverbindungen können alleine oder in beliebiger Kombination mit anderen halogenfreien Phosphorverbindungen eingesetzt werden.

Bevorzugte Mono- und oligomere Phosphor- bzw. Phosphonsäureester sind Phosphorverbindungen der allgemeinen Formel (VIII) 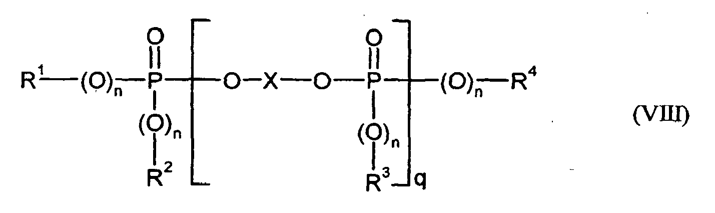 worin
- R¹, R², R³ und R⁴,: unabhängig voneinander jeweils C₁ bis C₈-Alkyl, C₅ bis C₆-Cycloalkyl, C₆ bis C₂₀-Aryl oder C₇ bis C₁₂-Aralkyl, welches jeweils gegebenenfalls durch Alkyl, vorzugsweise C₁ bis C₄-Alkyl, und/oder Halogen, vorzugsweise Chlor, Brom, substituiert sein kann,
- n: unabhängig voneinander, 0 oder 1,
- q: 0 bis 30 und
- X: einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

Bevorzugt stehen R¹, R², R³ und R⁴ unabhängig voneinander für C₁ bis C₄-Alkyl, Phenyl, Naphthyl oder Phenyl-C₁-C₄-alkyl. Die aromatischen Gruppen R¹, R², R³ und R⁴ können ihrerseits mit Halogen- und/oder Alkylgruppen, vorzugsweise Chlor, Brom und/oder C₁ bis C₄-Alkyl substituiert sein. Besonders bevorzugte Aryl-Reste sind Kresyl, Phenyl, Xylenyl, Propylphenyl oder Butylphenyl sowie die entsprechenden bromierten und chlorierten Derivate davon.
- X: in der Formel (IV) bedeutet bevorzugt einen ein- oder mehrkernigen aromatischen Rest mit 6 bis 30 C-Atomen. Dieser leitet sich bevorzugt von Diphenolen der Formel (I) ab.
- n: in der Formel (IV) kann, unabhängig voneinander, 0 oder 1 sein, vorzugsweise ist n gleich 1.
- q: steht für Werte von 0 bis 30, bevorzugt 0,3 bis 20, besonders bevorzugt 0,5 bis 10, insbe- sondere 0,5 bis 6, ganz besonders bevorzugt 1,1 bis 1,6.
- X: steht besonders bevorzugt für 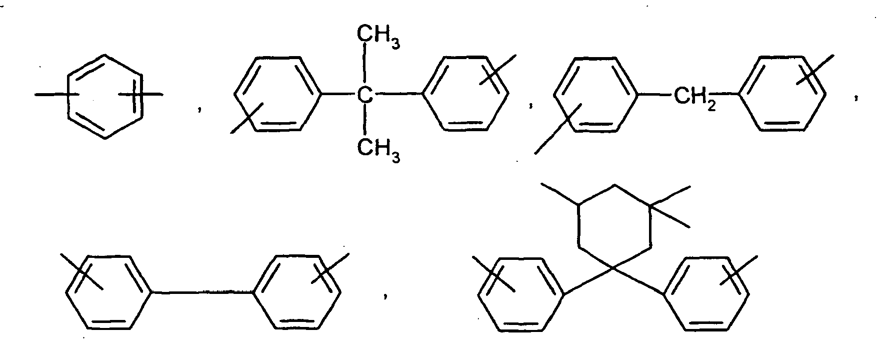
oder deren chlorierte oder bromierte Derivate, insbesondere leitet sich X von Resorcin, Hydrochinon, Bisphenol A oder Diphenylphenol ab. Besonders bevorzugt leitet sich X von Bisphenol A ab.

Als erfindungsgemäße Komponente D können auch Mischungen verschiedener Phosphate eingesetzt werden.

Phosphorverbindungen der Formel (VIII) sind insbesondere Tributylphosphat, Triphenylphosphat, Trikresylphosphat, Diphenylkresylphosphat, Diphenyloctylphosphat, Diphenyl-2-ethylkresylphosphat, Tri-(isopropylphenyl)-phosphat, Resorcin verbrücktes Diphosphat und Bisphenol A verbrücktes Diphosphat. Der Einsatz von oligomeren Phosphorsäureestern der Formel (VIII), die sich vom Bisphenol A ableiten, ist insbesondere bevorzugt.

Die Phosphorverbindungen gemäß Komponente D sind bekannt (vgl. z.B. EP-A 0 363 608, EP-A 0 640 655) oder lassen sich nach bekannten Methoden in analoger Weise herstellen (z.B. Ullmanns Enzyklopädie der technischen Chemie, Bd. 18, S. 301 ff. 1979; Houben-Weyl, Methoden der organischen Chemie, Bd. 12/1, S. 43; Beilstein Bd. 6, S. 177).

Die mittleren q-Werte können bestimmt werden, indem mittels geeigneter Methoden (Gaschromatographie (GC), High Pressure Liquid Chromatography (HPLC), Gelpermeationschromatographie (GPC)) die Zusammensetzung der Phosphat-Mischung (Molekulargewichtsverteilung) bestimmt wird und daraus die Mittelwerte für q berechnet werden.

Weiterhin können Phosphonatamine und Phosphazene, wie sie in WO 00/00541 und WO 01/18105 beschrieben sind, als Flammschutzmittel eingesetzt werden.

Die Flammschutzmittel können allein oder in beliebiger Mischung untereinander oder in Mischung mit anderen Flammschutzmitteln eingesetzt werden.

### Komponente E

Komponente E sind anorganische Borverbindungen mit Elementen der 6. Hauptgruppe des Periodensystems, bevorzugt mit Sauerstoff. Bevorzugte sauerstoffhaltige Borverbindungen sind Metallsalze der Borate, wobei die sauerstoffhaltige Borverbindung entweder als Orthoborat, Metaborat, Hydroxoborat oder Polyborat vorliegen kann. Als Gegenionen der Borate fungieren Metalle der 1. bis 5. Hauptgruppe oder der 1. bis 8. Nebengruppe des Periodensystems, bevorzugt Metalle der 1. und 2. Hauptgruppe oder der 1 und 2. Nebengruppe des Periodensystems, beispielsweise und bevorzugt Verbindungen wie Li₃[BO₃], Li[BO₂], Li[B(OH)₄], Na₃[B₃O₆], Na₂B₄O₇ • 4 H₂O, Na₂B₄O₇ • 10 H₂O, NaCaB₅O₉ • 6 H₂O, K₃[B₃O₆], KB₅O₈ • 4 H₂O, Mg₃[BO₃]₂, Ca[BO₃]₂, Ca[BO₂]₂, CaB₄O₇ • 4 H₂O, Ca₂B₆O₁₁ • 5 H₂O, Ca₂B₆O₁₁ • 7 H₂O, Ca₄B₁₀O₁₉ 7 H₂O, Ca₅B₁₂O₂₃ • 9 H₂O, Sr[BO₂]₂, Ba₃[B₃O₆]₂, Cu₃[BO₃]₂, Na₂B₄O₇ • 5H₂O, Na₂B₈O₁₃ • 4H₂O, BaB₂O₄ • H₂O, ZnB₂O₄ • 2H₂O, Zn₂B₄O₈ • 3H₂O, Zn₂B₆O₁₁ • 7H₂O, Zn₂B₆O₁₁ • 9H₂O, Zn₃B₄O₉ • 5H₂O, Zn[B₃O₃(OH)₅] • H₂O, Zn₃[BO₃]₂, Zn₂B₆O₁₁, Zn₄B₂O₇ • H₂O, Zn₂B₆O₁₁ • 3,5 H₂O und ZnB₄O₇ • 4 H₂O. Dabei können die anorganischen Borverbindungen entweder alleine oder in Gemischen eingesetzt werden.

Besonders bevorzugt sind solche anorganischen Borverbindungen, die bei Temperaturen von 200 bis 1000°C, insbesondere von 300 bis 600 °C Wasser abspalten, das als Kristallwasser gebunden ist. Ganz besonders bevorzugt ist Zinkborathydrat (z.B. Zn₄B₂O₇ • H₂O, Zn₂B₆O₁₁ • 3,5 H₂O und ZnB₄O₇ • 4 H₂O), insbesondere Zn₂B₆O₁₁ • 3,5 H₂O.

Der mittlere Teilchendurchmesser der anorganischen Borverbindungen beträgt 1 nm bis 20 µm, bevorzugt 0,1 µm bis 15 µm, und besonders bevorzugt 0,5 µm - 12 µm.

Teilchengröße und Teilchendurchmesser bedeutet immer den mittleren Teilchendurchmesser d₅₀, ermittelt durch Ultrazentrifugenmessungen nach W. Scholtan et al. Kolloid-Z. und Z. Polymere 250(1972), S. 782 bis 796.

### Antitropfmittel F

Als Antitropfmittel können die erfindungsgemäßen Zusammensetzungen vorzugsweise fluorierte Polyolefine F enthalten. Fluorierte Polyolefine sind allgemein bekannt (vgl. z.B. EP-A 640 655). Ein handelsübliches Produkt ist beispielsweise Teflon^{®} 30 N von der Firma DuPont.

Die fluorierten Polyolefine können auch in Form einer koagulierten Mischung von Emulsionen der fluorierten Polyolefine mit Emulsionen der Pfropfpolymerisate B) oder einer Emulsion eines Copolymerisats G.1) vorzugsweise auf Styrol/Acrylnitril-Basis eingesetzt werden, wobei das fluorierte Polyolefin als Emulsion mit einer Emulsion des Pfropfpolymerisats bzw. Copolymerisats gemischt und anschließend koaguliert wird.

Weiterhin können die fluorierten Polyolefine als Präcompound mit dem Pfropfpolymerisat B) oder einem Copolymerisat G.1) auf vorzugsweise Styrol/Acrylnitril-Basis eingesetzt werden. Die fluorierten Polyolefine werden als Pulver mit einem Pulver oder Granulat des Pfropfpolymerisats bzw. Copolymerisats vermischt und in der Schmelze im allgemeinen bei Temperaturen von 200 bis 330°C in üblichen Aggregaten wie Innenknetern, Extrudern oder Doppelwellenschnecken compoundiert.

Die fluorierten Polyolefine können auch in Form eines Masterbatches eingesetzt werden, welcher durch Emulsionspolymerisation mindestens eines monoethylenisch ungesättigten Monomers in Gegenwart einer wässrigen Dispersion des fluorierten Polyolefins hergestellt wird. Bevorzugte Monomerkomponenten sind Styrol, Acrylnitril und Mischungen daraus. Das Polymerisat wird nach saurer Fällung und nachfolgender Trocknung als rieselfähiges Pulver eingesetzt.

Die Koagulate, Präcompounds bzw. Masterbatches besitzen üblicherweise Feststoffgehalte an fluoriertem Polyolefin von 5 bis 95 Gew.-%, vorzugsweise 7 bis 60 Gew.-%.

### Komponente G

Die erfindungsgemäße Zusammensetzung kann als weitere Komponente G ein oder mehrere thermoplastische Vinyl(Co)Polymerisate G.1 und/oder Polyalkylenterephthalate G.2 enthalten in Mengen von 0 - 1,5, bevorzugt 0 - 1 Gew.-Teilen. Besonders bevorzugt ist die Zusammensetzung frei von thermoplastischen V inyl(Co)Polymerisate G.1 und Polyalkylenterephthalaten G.2. Geeignet sind als Vinyl(Co)Polymerisate G.1 Polymerisate von mindestens einem Monomeren aus der Gruppe der Vinylaromaten, Vinylcyanide (ungesättigte Nitrile), (Meth)Acrylsäure-(C₁-C₈)-Alkylester, ungesättigte Carbonsäuren sowie Derivate (wie Anhydride und Imide) ungesättigter Carbonsäuren. Insbesondere geeignet sind (Co)Polymerisate aus
- G.1.1: 50 bis 99, vorzugsweise 60 bis 80 Gew.-Teilen Vinylaromaten und/oder kernsubstituierten Vinylaromaten wie Styrol, α-Methylstyrol, p-Methylstyrol, p-Chlorstyrol) und/oder Methacrylsäure-(C₁-C₈)-Alkylester, wie Methylmethacrylat, Ethylmethacrylat), und
- G.1.2: 1 bis 50, vorzugsweise 20 bis 40 Gew.-Teilen Vinylcyanide (ungesättigte Nitrile) wie Acryl-nitril und Methacrylnitril und/oder (Meth)Acryl-säure-(C₁-C₈)-Alkylester, wie Methylmeth-acrylat, n-Butylacrylat, t-Butylacrylat, und/oder ungesättigte Carbonsäuren, wie Maleinsäure, und/oder Derivate, wie Anhydride und Imide, ungesättigter Carbonsäuren, beispielsweise Maleinsäureanhydrid und N-Phenylmaleinimid).

Die Vinyl(co)polymerisate G.1 sind harzartig, thermoplastisch und kautschukfrei. Besonders bevorzugt ist das Copolymerisat aus G.1.1 Styrol und G.1.2 Acrylnitril.

Die (Co)Polymerisate gemäß G.1 sind bekannt und lassen sich durch radikalische Polymerisation, insbesondere durch Emulsions-, Suspensions-, Lösungs- oder Massepolymerisation herstellen. Die (Co)Polymerisate besitzen vorzugsweise mittlere Molekulargewichte Mw (Gewichtsmittel, ermittelt durch Lichtstreuung oder Sedimentation) zwischen 15.000 und 200.000.

Die Polyalkylenterephthalate der Komponente G.2 sind Reaktionsprodukte aus aromatischen Dicarbonsäuren oder ihren reaktionsfähigen Derivaten, wie Dimethylestern oder Anhydriden, und aliphatischen, cycloaliphatischen oder araliphatischen Diolen sowie Mischungen dieser Reaktionsprodukte.

Bevorzugte Polyalkylenterephthalate enthalten mindestens 80 Gew.-%, vorzugsweise mindestens 90 Gew.-%, bezogen auf die Dicarbonsäurekomponente Terephthalsäurereste und mindestens 80 Gew.-%, vorzugsweise mindestens 90 mol-%, bezogen auf die Diolkomponente Ethylenglykol- und/oder Butandiol-1,4-Reste.

Die bevorzugten Polyalkylenterephthalate können neben Terephthalsäureresten bis zu 20 mol-%, vorzugsweise bis zu 10 mol%, Reste anderer aromatischer oder cycloaliphatischer Dicarbonsäuren mit 8 bis 14 C-Atomen oder aliphatischer Dicarbonsäuren mit 4 bis 12 C-Atomen enthalten, wie z.B. Reste von Phthalsäure, Isophthalsäure, Naphthalin-2,6-dicarbonsäure, 4,4'-Diphenyldicarbonsäure, Bernsteinsäure, Adipinsäure, Sebacinsäure, Azelainsäure, Cyclohexandiessigsäure.

Die bevorzugten Polyalkylenterephthalate können neben Ethylenglykol- bzw. Butandiol-1,4-Resten bis zu 20 mol-%, vorzugsweise bis zu 10 mol-%, andere aliphatische Diole mit 3 bis 12 C-Atomen oder cycloaliphatische Diole mit 6 bis 21 C-Atomen enthalten, z.B. Reste von Propandiol-1,3, 2-Ethylpropandiol-1,3, Neopentylglykol, Pentandiol-1,5, Hexandiol-1,6, Cyclo- hexan-dimethanol-1,4, 3-Ethylpentandiol-2,4, 2-Methylpentandiol-2,4, 2,2,4-Trimethylpentandiol-1,3, 2-Ethylhexandiol-1,3, 2,2-Diethylpropandiol-1,3, Hexandiol-2,5, 1,4-Di-(β-hydroxyethoxy)-benzol, 2,2-Bis-(4-hydroxycyclohexyl)-propan, 2,4-Dihydroxy-1,1,3,3-tetramethyl-cyclobutan, 2,2-Bis-(4-β-hydroxyethoxy-phenyl)-propan und 2,2-Bis-(4-hydroxypropoxyphenyl)-propan (DE-A 2 407 674, 2 407 776, 2 715 932).

Die Polyalkylenterephthalate können durch Einbau relativ kleiner Mengen 3- oder 4-wertiger Alkohole oder 3- oder 4-basischer Carbonsäuren, z.B. gemäß DE-A 1 900 270 und US-PS 3 692 744, verzweigt werden. Beispiele bevorzugter Verzweigungsmittel sind Trimesinsäure, Trimellithsäure, Trimethylolethan und -propan und Pentaerythrit.

Besonders bevorzugt sind Polyalkylenterephthalate, die allein aus Terephthalsäure und deren reaktionsfähigen Derivaten (z.B. deren Dialkylestern) und Ethylenglykol und/oder Butandiol-1,4 hergestellt worden sind, und Mischungen dieser Polyalkylenterephthalate.

Mischungen von Polyalkylenterephthalaten enthalten 1 bis 50 Gew.-%, vorzugsweise 1 bis 30 Gew.%, Polyethylenterephthalat und 50 bis 99 Gew.-%, vorzugsweise 70 bis 99 Gew.-%, Polybutylenterephthalat.

Die vorzugsweise verwendeten Polyalkylenterephthalate besitzen im allgemeinen eine Grenzviskosität von 0,4 bis 1,5 dl/g, vorzugsweise 0,5 bis 1,2 dl/g, gemessen in Phenol/o-Dichlorbenzol (1:1 Gewichtsteile) bei 25°C im Ubbelohde-Viskosimeter.

Die Polyalkylenterephthalate lassen sich nach bekannten Methoden herstellen (s. z.B. Kunststoff-Handbuch, Band VIII, S. 695 ff., Carl-Hanser-Verlag, München 1973).

### Weitere Zusatzstoffe H

Die erfindungsgemäßen Formmassen können wenigstens ein weiteres der üblichen Additive, wie z.B. Gleit- und Entformungsmittel, Nukleiermittel, Antistatika, Stabilisatoren, Farbstoffe und Pigmente sowie von Talk und Komponente E verschiedene Füll- und Verstärkungsstoffe enthalten.

Die Komponente H umfasst auch feinstteilige anorganische Verbindungen, die sich durch einen durchschnittlichen Teilchendurchmesser von kleiner gleich 200 nm, bevorzugt kleiner gleich 150 nm, insbesondere 1 bis 100 nm auszeichnen.

Geeignete feinstteilige anorganische Verbindungen bestehen vorzugsweise aus wenigstens einer polaren Verbindung von einem oder mehreren Metallen der 1. bis 5. Hauptgruppe oder 1. bis 8. Nebengruppe des Periodensystems, bevorzugt der 2. bis 5. Hauptgruppe oder 4. bis 8. Nebengruppe, besonders bevorzugt der 3. bis 5. Hauptgruppe oder 4. bis 8. Nebengruppe, oder aus Verbindungen dieser Metalle mit wenigstens einem Element ausgewählt aus Sauerstoff, Wasserstoff, Schwefel, Phosphor, Bor, Kohlenstoff, Stickstoff oder Silicium. Bevorzugte Verbindungen sind beispielsweise Oxide, Hydroxide, wasserhaltige Oxide, Sulfate, Sulfite, Sulfide, Carbonate, Carbide, Nitrate, Nitrite, Nitride, Borate, Silikate, Phosphate, Hydride, Phosphite oder Phosphonate.

Bevorzugt bestehen die feinstteiligen anorganischen Verbindungen aus Oxiden, Phosphaten, Hydroxiden, vorzugsweise aus TiO₂, SiO₂, SnO₂, ZnO, ZnS, Böhmit, ZrO₂, Al₂O₃, Aluminiumphosphate, Eisenoxide, ferner TiN, WC, AlO(OH), Fe₂O₃ Eisenoxide, NaSO₄, Vanadianoxide, Zinkborat, Silikate wie Al-Silikate, Mg-Silikate, ein-, zwei-, dreidimensionale Silikate. Mischungen und dotierte Verbindungen sind ebenfalls verwendbar. Des weiteren können diese feinstteilige anorganische Verbindungen mit organischen Molekülen oberflächenmodifiziert sein, um eine bessere Verträglichkeit mit den Polymeren zu erzielen. Auf diese Weise lassen sich hydrophobe oder hydrophile Oberflächen erzeugen.

Besonders bevorzugt sind hydrathaltige Aluminiumoxide (z.B. Böhmit) oder TiO₂.

Teilchengröße und Teilchendurchmesser bedeutet immer den mittleren Teilchengröße d₅₀, ermittelt durch Ultrazentrifugenmessungen nach W. Scholtan et al., Kolloid-Z. und Z. Polymere 250 (1972), S. 782-796.

Die anorganischen Verbindungen können als Pulver, Pasten, Sole, Dispersionen oder Suspensionen vorliegen. Durch Ausfällen können aus Dispersionen, Solen oder Suspensionen Pulver erhalten werden.

Die feinstteiligen anorganischen Verbindungen können nach üblichen Verfahren in die thermoplastischen Formmassen eingearbeitet werden, beispielsweise durch direktes Kneten oder Extrudieren von Formmassen und den feinstteiligen anorganischen Verbindungen. Bevorzugte Verfahren stellen die Herstellung eines Masterbatch, z.B. in Flammschutzadditiven, und wenigstens einer Komponente der erfindungsgemäßen Formmassen in Monomeren oder Lösungsmitteln, oder die Cofällung von einer thermoplastischen Komponente und den feinstteiligen anorganischen Verbindungen, z.B. durch Cofällung einer wäßrigen Emulsion und den feinstteiligen anorganischen Verbindungen dar, gegebenenfalls in Form von Dispersionen, Suspensionen, Pasten oder Solen der feinstteiligen anorganischen Materialien.

Die Zusammensetzungen werden hergestellt, indem man die jeweiligen Bestandteile in bekannter Weise vermischt und bei Temperaturen von 200°C bis 300°C in üblichen Aggregaten wie Innenknetern, Extrudern und Doppelwellenschnecken schmelzcompoundiert und schmelzextrudiert.

Die Vermischung der einzelnen Bestandteile kann in bekannter Weise sowohl sukzessive als auch simultan erfolgen, und zwar sowohl bei etwa 20°C (Raumtemperatur) als auch bei höherer Temperatur.

Die thermoplastischen Formmassen eignen sich aufgrund ihrer ausgezeichneten Flammfestigkeit und ihrer hohen Wärmeformbeständigkeit zur Herstellung von Formkörpern jeglicher Art. Aufgrund der Wärmeformbeständigkeit und rheologischen Eigenschaften sind Verarbeitungstemperaturen von über 240°C bevorzugt.

Gegenstand der Erfindung sind ebenfalls Verfahren zur Herstellung der Formmassen und die Verwendung der Formmassen zur Herstellung von Formkörpern.

Die Formmassen können durch Spritzguss zu Formkörpern verarbeitet werden oder vorzugsweise können die Formmassen zu Platten oder Folien, besonders bevorzugt zu Platten extrudiert werden.

Ein weiterer Gegenstand der Erfindung ist die Herstellung von Formkörpern durch Thermoformen aus vorher hergestellten Platten oder Folien.

Thermoformverfahren sind z.B. von G. Burkhardt et al. beschrieben ("Plastics, Processing", in Ullmann's Encyclopedia of Industrial Chemistry, Wiley-VCH Verlag GmbH & Co. KgaA, 2002), oder im Römpp Lexikon Chemie, Georg Thieme Verlag Stuttgart, 1999. Thermoformverfahren beschreiben allgemein Prozesse, in denen halbfertige Kunststoffprodukte erwärmt und unter dem Einfluß externer Kräfte (Wärme, Druck oder Vakuum) zu dreidimensionalen Gebilden geformt werden.

Während man beim Ziehen (Warmformen) eine vorgewärmte Kunststoffplatte zwischen die beiden Teile des Werkzeugs, das Positiv und das Negativ, einführt und diese dann zusammendrückt, wodurch das Kunststoffteil seine Form erhält, funktioniert das Ziehformen mit federnden Niederhaltern. Der Prozeß ohne Negativ-Werkzeug wird als Tiefziehen bezeichnet; auch eine Verformung durch ein Vakuum (Vakuumformen) ist möglich.

Die hier beschriebenen extrudierten flächigen Formkörper lassen sich beispielsweise im Tiefziehverfahren bei Oberflächentemperaturen von 150 °C bis 220°C verarbeiten, besonders bevorzugt bei Oberflächentemperaturen von 160 °C bis 215°C.

Gegenstand der Erfindung ist somit auch ein Verfahren zur Herstellung der erfindungsgemäßen thermogeformten Formkörper wobei
(i) in einem ersten Schritt die Komponenten der Polycarbonat-Zusammensetzung geschmolzen und vermischt werden,
(ii) in einem zweiten Schritt die resultierende Schmelze gekühlt und granuliert wird,
(iii) in einem dritten Schritt das Granulat geschmolzen und zu Platten extrudiert wird, und
(iv) in einem vierten Schritt die Platten zu einem dreidimensionalen Gebilde geformt werden, vorzugsweise mittels Warmformen, Ziehformen, Tiefziehen oder Vakuumformen unter Einfluß externer Kräfte, beispielsweise mittels eines ein- oder zweiteiligen Werkzeugs und/oder mittels Vakuum, , wobei das dreidimensionalen Gebilde vorzugsweise im Tiefziehverfahren und vorzugsweise bei einer Oberflächentemperatur der Platte von 150 °C bis 220°C, besonders bevorzugt bei Oberflächentemperaturen von 160 °C bis 215°C geformt wird.

Die Formkörper sind für folgende Anwendungen geeignet: Fahrzeugteile oder Innenausbauteile für Kraftfahrzeuge, Busse, Lastwagen, Wohnmobile, Schienenfahrzeuge, Luftfahrzeuge, Wasserfahrzeuge oder sonstige Fahrzeuge, Abdeckplatten für den Bausektor, flächige Wandelemente, Trennwände, Wandschutz- und Kantenschutzleisten, Profile für Elektroinstallationskanäle, Kabelleiter, Stromschienenabdeckungen, Fenster- und Türprofile, Möbelteile und Verkehrsschilder. Die Formkörper sind besonders für folgende Anwendungen geeignet: Fahrzeugteile oder Innenausbauteile für PKW, Busse, Lastwagen, Wohnmobile, Schienen- und Luftfahrzeuge.

Besonders bevorzugt eignen sich die Formkörper zur Herstellung von Abdeckungen, Decken- und Seitenverkleidungen, Gepäckklappen und ähnlichen Innenverkleidungen für Schienen- und Luftfahrzeuge.

Die folgenden Beispiele dienen der weiteren Erläuterung der Erfindung.

### Beispiele

### Komponente A1

Verzweigtes Polycarbonat auf Basis Bisphenol A mit einer relativen Lösungsviskosität von ηᵣₑₗ = 1,34, gemessen in CH₂Cl₂ als Lösungsmittel bei 25°C und einer Konzentration von 0,5 g/100 ml, welches durch Einsatz von 0,3 mol-% Isatinbiscresol bezogen auf die Summe aus Bisphenol A und Isatinbiscresol verzweigt wurde.

### Komponente B1

Schlagzähmodifikator, Methylmethacrylat-modifizierter Silikon-Acrylat-Kautschuk, Metablen^{®} SX 005 der Firma Mitsubishi Rayon Co., Ltd., CAS 143106-82-5.

### Komponente B2

Schlagzähmodifikator, Styrol-Acrylnitril-modifizierter Silikon-Acrylat-Kautschuk" Metablen^{®} SRK 200 der Firma Mitsubishi Rayon Co., Ltd., CAS 178462-89-0.

### Komponente C1

Talk, Luzenac^{®} A3C der Firma Luzenac Naintsch Mineralwerke GmbH mit einem MgO-Gehalt von 32 Gew.-%, einem SiO₂-Gehalt von 61 Gew.-% und einem Al₂O₃-Gehalt von 0,3 Gew.-%.

### Komponente D

### Bisphenol-A basierendes Oligophosphat

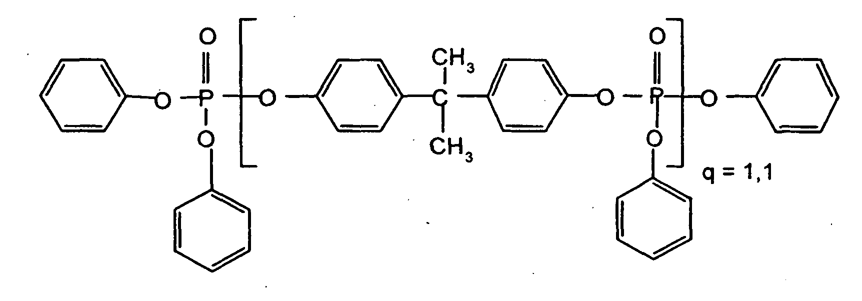

### Komponente E

Zinkborathydrat (Zn₂B₆O₁₁ • 3,5 H₂O, CAS No. 138265-88-0)

### Komponente F

Polytetrafluorethylen-Pulver, CFP 6000 N, Fa. Du Pont.

### Komponente H

Mischung aus 0,2 Gew.Tle Pentaerythrittetrastearat als Gleit-/Entformungsmittel und 0,1 Gew.-Tle Phosphitstabilisator, Irganox^{®} B 900, Fa. Ciba Speciality Chemicals.

### Herstellung und Prüfung der Formmassen

Auf einem Zweischneckenextruder (ZSK-25) (Fa. Werner und Pfleiderer) werden die in Tabelle 1 aufgeführten Einsatzstoffe bei einer Drehzahl von 225 Upm und einem Durchsatz von 20 kg/h bei einer Maschinentemperatur von 260°C compoundiert und granuliert.

Die fertigen Granulate werden auf einer Spritzgussmaschine zu den entsprechenden Probekörpern verarbeitet (Massetemperatur 260°C, Werkzeugtemperatur 80°C, Fließfrontgeschwindigkeit 240 mm/s). Die Charakterisierung erfolgt gemäß DIN EN ISO 180/1A (Izod-Kerbschlagzähigkeit), DIN EN ISO 527 (Zug-E-Modul), DIN ISO 306 (Vicat-Erweichungstemperatur, Verfahren B mit 50 N Belastung und einer Heizrate von 120 K/h), ISO 11443 (Schmelzeviskosität), DIN EN ISO 1133 (Schmelze-Volumen-Fließrate, melt volume-flow rate MVR) und UL 94 V.

Zusätzlich werden auf einer Platten- und Folienanlage der Fa. Breyer, Singen, bei 270°C Schmelzetemperatur Platten von 3 mm Dicke extrudiert (Entgasungs-Extruder Breyer 60 ohne Granulat-Vortrocknung, Dreiwalzen-Glättwerk, Zweiwalzenabzug, radiometrische Dickenmessung).

Aus den extrudierten Platten werden die entsprechenden Probekörpergeometrien für ASTM E 162 und ASTM E 662 geschnitten. Die Bestimmung des Flammenausbreitungsindex (Is) und des Abtropfverhaltens erfolgt gemäß ASTM E 162 (mit Aluminiumhinterlegung, d = 3 mm). Die Bestimmung der Rauchgasdichte erfolgt gemäß ASTM E 662 (mit Zündflamme, d = 3 mm).

Die Anforderungen an Materialien für amerikanische Schienenfahrzeugen sind im sog. Docket 90 A (Recommended Fire Safety Practices for Transit Bus and Van Materials Selection - herausgegeben vom Department of Transportation, Federal Transit Administration, Federal Register, Vol. 58, No. 201) niedergelegt. Demnach dürfen Materialien für Innenverkleidungen in ASTM E 162 kein brennendes Abtropfen zeigen und müssen einen Flammenausbreitungsindex Is von kleiner als 35 aufweisen, außerdem müssen sie gemäß ASTM E 662 eine niedrige Rauchgasdichte (Ds 1,5 min < 100 und Ds 4 min < 200) aufweisen.

Die Thermoformbarkeit lässt sich durch Herstellung sog. Tiefziehpyramiden demonstrieren, wobei die extrudierten Platten in eine Stufenpyramide mit sechs Elementen bei 200°C bis in eine Tiefe von 20cm tiefgezogen werden. Die Oberflächenqualität der Tiefziehpyramiden wird visuell beurteilt. Dabei bedeutet die Beurteilung "gut", dass keine Kantenrisse und keineWeißbrüche an den Ecken auftreten. Die Beurteilung "schlecht" bedeutet, dass entweder Kantenrisse und/oder Weißbrüche an den Ecken auftreten.

Aus Tabelle 1 ist ersichtlich, dass nur die Zusammensetzungen der Beispiele 3-6 mit der Kombination aus verzweigtem Polycarbonat, Silikon-Schlagzähmodifikator, BDP, Talk und Zinkborathydrat die erfindungsgemäße Aufgabe lösen und die Anforderungen nach der amerikanischen Regelung für Schienenfahrzeuge (Docket 90 A) erfüllen, d.h. gemäß ASTM E 162 einen Flammenausbreitungsindex Is von kleiner als 35 aufweisen, bei dem Test gemäß ASTM E 162 kein brennendes Abtropfen aufweisen und die Anforderungen bezüglich der Rauchgasdichte nach ASTM E 662 erfüllen (Ds 1,5 min < 100 und Ds 4 min < 200). Der Zug-E-Modul liegt zudem bei den erfindungsgemäßen Beispielen 3-6 deutlich über 3500 N/mm². Die Vergleichsbeispiele V1 und V2 erfüllen dagegen mindestens eine der zuvor genannten Anforderungen nicht.

**Tabelle 1 Zusammensetzung und Eigenschaften der Formmassen**

| **Komponenten (Gew.-%)** | | **V1** | **V2** | **3** | **4** | **5** | **6** |
|---|---|---|---|---|---|---|---|
| A1 | | 74,5 | 77,6 | 72,6 | 70,6 | 72,6 | 70,5 |
| B1 B2 | | 4,7 | 4,7 | 4,7 | 4,7 | 4,7 | 4,7 |
| C1 | | 10 | | 10 | 10 | 10 | 10 |
| D | | 10,1 | 13 | 10 | 10 | 10 | 10,1 |
| E | | | 4 | 2 | 4 | 2 | 4 |
| F | | 0,4 | 0,4 | 0,4 | 0,4 | 0,4 | 0,4 |
| H | | 0,3 | 0,3 | 0,3 | 0,3 | 0,3 | 0,3 |
| **Eigenschaften** | | | | | | | |
| Izod-Kerbschlagzähigkeit / RT (DIN EN ISO 180/1A) | kJ/m² | 13,8 | 10,6 | 10,4 | 9,9 | 8,0 | 7,6 |
| Zug-E-Modul (DIN EN ISO 527) | N/mm² | 3813 | 2664 | 3784 | 3871 | 4076 | 4082 |
| Vicat B 120 (DIN ISO 306) | °C | 112 | 104 | 110 | 110 | 111 | 111 |
| Schmelzeviskosität (260°C) [ 100 s⁻¹] (ISO 11443) | Pas | 1161 | 653 | 914 | 992 | 881 | 1001 |
| Schmelzeviskosität (260°C) [ 1000 s⁻¹] (ISO 11443) | Pas | 406 | 291 | 349 | 377 | 345 | 372 |
| Schmelzeviskosität (260°C) [ 1500 s⁻¹] (ISO 11443) | Pas | 315 | 236 | 274 | 293 | 274 | 289 |
| MVR 260°C/5 kg (DIN EN ISO 1133) | cm³/10min. | 7,5 | 18,8 | 9,8 | 9 | 11,0 | 9,3 |
| UL 94 V (d = 1,5 mm): Klassifizierung | | V0 | V0 | V0 | V0 | V0 | V0 |
| UL 94 V (d = 1,5 mm): Gesamt-Nachbrennzeit | s | 10 | 19 | 10 | 8 | 5 | 7 |
| Flammenausbreitungsindex Is (ASTM E 162 (d= 3 mm)) | | 11 | 28 | 6 | 7 | 0 | 5 |
| Brennendes Abtropfen? (ASTM E 162 (d= 3 mm)) | Ja/Nein | Ja | Ja | Nein | Nein | Nein | Nein |
| Rauchgasdichte Ds nach 1,5 min (ASTM E 662 (d = 3mm)) | | n.b. | 9 | 2 | 2 | 2 | 2 |
| Rauchgasdichte Ds nach 4 min (ASTM E 662 (d = 3mm)) | | n.b. | 143 | 68 | 69 | 100 | 79 |
| Test nach Docket 90 A (d = 3mm) / bestanden? | Ja/Nein | Nein | Nein | Ja | Ja | Ja | Ja |
| Visuelle Beurteilung der Tiefziehpyramiden | gut/schlecht | n.b. | n.b. | gut | gut | gut | gut |

| | | | | | | | |
|---|---|---|---|---|---|---|---|
| n.b. = nicht bestimmt | | | | | | | |

## Patentansprüche

1. Zusammensetzungen enthaltend
A) 60-85 Gew.-Teile verzweigtes aromatisches Polycarbonat und/oder verzweigtes aromatisches Polyestercarbonat,
B) 1 - 25 Gew.-Teile Pfropfpolymerisat enthaltend eine oder mehrere Pfropfgrundlagen ausgewählt aus der Gruppe der Silikonkautschuke und Silikonacrylat-Kautschuke,
C) 10-15 Gew.-Teile Talk,
D) 0,4 - 20 Gew.-Teile phosphorhaltiges Flammschutzmittel,
E) 0,5 - 20 Gew.-Teile einer oder mehrerer anorganischer Borverbindungen, und
F) 0 - 3 Gew.-Teile Antitropfmittel.

2. Zusammensetzungen gemäß Anspruch 1 enthaltend verzweigtes aromatisches Polycarbonat oder Polyestercarbonat (Komponente A), die als aktive funktionelle Gruppen Amin-Funktionalitäten enthält.

3. Zusammensetzungen nach Anspruch 1 oder 2, worin das Pfropfpolymerisat (B) aufgebaut ist aus
B.1) 5 bis 95 Gew.-% eines oder mehrerer Vinylmonomeren auf
B.2) 95 bis 5 Gew.-% einer oder mehrerer Pfropfgrundlagen ausgewählt aus der Gruppe der Silikonkautschuke (B.2.1) und Silikonacrylat-Kautschuke (B.2.2), wobei die Pfropfgrundlage eine Glasumwandlungstemperatur <10°C aufweist.

4. Zusammensetzungen nach einem der Ansprüche 1 bis 3 enthaltend phosphorhaltiges Flammschutzmittel (D) der allgemeinen Formel (VIII) 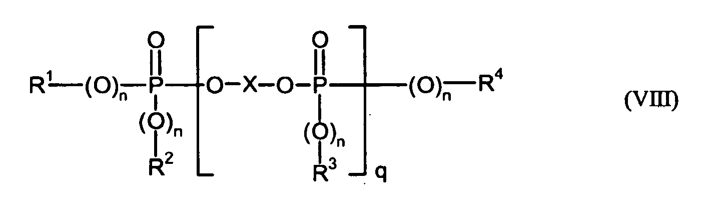 worin
R¹, R², R³ und R⁴, unabhängig voneinander jeweils gegebenenfalls halogeniertes C₁ bis C₈-Alkyl, jeweils gegebenenfalls durch Alkyl, vorzugsweise C₁ bis C₄-Alkyl, und/oder Halogen, vorzugsweise Chlor, Brom, substituiertes C₅ bis C₆- Cycloalkyl, C₆ bis C₂₀-Aryl oder C₇ bis C₁₂-Aralkyl,
n unabhängig voneinander, 0 oder 1
q 0 bis 30 und
X einen ein- oder mehrkernigen aromatischen Rest mit 6 bis 30 C-Atomen, oder einen linearen oder verzweigten aliphatischen Rest mit 2 bis 30 C-Atomen, der OH-substituiert sein und bis zu 8 Etherbindungen enthalten kann, bedeuten.

5. Zusammensetzungen gemäß Anspruch 4, worin X in Formel (VIII) für Bisphenol A steht.

6. Zusammensetzungen nach einem der Ansprüche 1 bis 5 enthaltend 4,7 bis 6,6 Gew.-Teile an Komponente B und 10 bis 12 Gew.-Teile an Komponente C.

7. Zusammensetzungen nach einem der Ansprüche 1 bis 6, wobei der Talk gemäß Komponente C eine mittlere Teilchengröße (d₅₀) von 1,1 bis 5 µm aufweist.

8. Zusammensetzungen nach einem der Ansprüche 1 bis 7 enthaltend als Komponente E mindestens eine Verbindung ausgewählt aus der Gruppe bestehend aus Li₃[BO₃], Li[BO₂], Li[B(OH)₄]_{,} Na₃[B₃O₆], Na₂B₄O₇ • 4 H₂O, Na₂B₄O₇ • 10 H₂O, NaCaB₅O₉ • 6 H₂O, K₃[B₃O₆], KB₅O₈ • 4 H₂O, Mg₃[BO₃]₂, Ca[BO₃]₂, Ca[BO₂]₂, CaB₄O₇ • 4 H₂O, Ca₂B₆O₁₁ • 5 H₂O, Ca₂B₆O₁₁ • 7 H₂O, Ca₄B₁₀O₁₉ • 7 H₂O, Ca₅B₁₂O₂₃ • 9 H₂O, Sr[BO₂]₂, Ba₃[B₃O₆]₂, Cu₃[BO₃]₂, Na₂B₄O₇ • SH₂O, Na₂B₈O₁₃ • 4H₂O, BaB₂O₄ • H₂O, ZnB₂O₄ • 2H₂O, Zn₂B₄O₈ • 3H₂O, Zn₂B₆O₁₁ • 7H₂O, Zn₂B₆O₁₁ • 9H₂O, Zn₃B₄O₉ • 5H₂O, Zn[B₃O₃(OH)₅] • H₂O, Zn₃[BO₃]₂, Zn₂B₆O₁₁, Zn₄B₂O₇ • H₂O, Zn₂B₆O₁₁ • 3,5 H₂O und ZnB₄O₇ • 4 H₂O.

9. Zusammensetzungen nach Anspruch 8 enthaltend als Komponente E Zn₄B₂O₇ • H₂O, Zn₂B₆O₁₁ • 3,5 H₂O und/oder ZnB₄O₇ • 4 H₂O.

10. Zusammensetzungen nach einem der Ansprüche 1 bis 9, die frei sind von thermoplastischen Vinyl(Co)Polymerisaten G.1 und Polyalkylenterephthalaten G.2.

11. Zusammensetzungen nach einem der Ansprüche 1 bis 10 enthaltend Gleit- und Entformungsmittel, Nukleiermittel, Antistatika, Stabilisatoren, Farbstoffe und Pigmente sowie von Talk verschiedene Füll- und Verstärkungsstoffe.

12. Verwendung der Zusammensetzungen nach einem der Ansprüche 1 bis 11 zur Herstellung von spritzgegossenen oder thermogeformten Formkörpern.

13. Formkörper enthaltend eine Zusammensetzung nach einem der Ansprüche 1 bis 11.

14. Formkörper gemäß Anspruch 13, **dadurch gekennzeichnet, dass** der Formkörper ein Teil eines Kraftfahrzeugs, Busses, Lastwagens, Wohnmobils, Schienenfahrzeugs, Wasserfahrzeugs oder eines sonstigen Fahrzeuges ist oder eine Abdeckplatte für den Bausektor, flächiges Wandelement, Trennwand, Wandschutz- und Kantenschutzleiste, Profil für Elektroinstallationskanäle, Kabelleiter, Stromschienenabdeckung, Fenster- und Türprofil, Möbelteil oder ein Teil eines Verkehrsschildes ist.

15. Formkörper gemäß Anspruch 14, **dadurch gekennzeichnet, dass** der Formkörper ein Teil eines Luftfahrzeugs ist.

## Claims

1. Compositions containing
A) 60 - 85 parts by weight of branched aromatic polycarbonate and/or branched aromatic polyester carbonate,
B) 1 - 25 parts by weight of a graft polymer including one or more graft bases selected from the group comprising the silicone rubbers and silicone-acrylate rubbers,
C) 10 - 15 parts by weight of talc,
D) 0.4 - 20 parts by weight of phosphorus-containing flameproofing agent,
E) 0.5 - 20 parts by weight of one or more inorganic boron compounds, and
F) 0 - 3 parts by weight of anti-dripping agents.

2. Compositions according to Claim 1, containing branched aromatic polycarbonate or polyester carbonate (component A) which contains amine functionalities by way of active functional groups.

3. Compositions according to Claim 1 or 2, wherein the graft polymer (B) is synthesised from
B.1) 5 wt.% to 95 wt.% of one or more vinyl monomers on
B.2) 95 wt.% to 5 wt.% of one or more graft bases selected from the group comprising the silicone rubbers (B.2.1) and silicone-acrylate rubbers (B.2.2), wherein the graft base exhibits a glass transition temperature < 10 °C.

4. Compositions according to one of Claims 1 to 3, containing phosphorus-containing flameproofing agent (D) of the general formula (VIII), 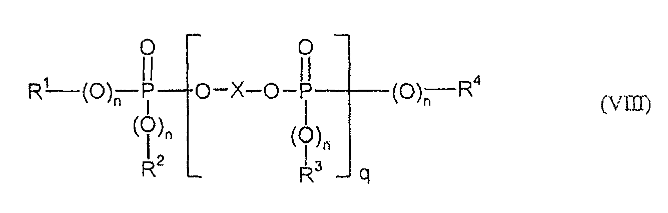 in which
R¹, R², R³ and R⁴ signify, independently of one another, C₁ to C₈ alkyl, which in each instance is optionally halogenated, C₅ to C₆ cycloalkyl, C₆ to C₂₀ aryl or C₇ to C₁₂ aralkyl, which in each instance are optionally substituted by alkyl, preferentially C₁ to C₄ alkyl, and/or halogen, preferentially chlorine, bromine,
n signify, independently of one another, 0 or 1,
q signifies 0 to 30 and
X signifies a single-ring or multi-ring aromatic residue with 6 to 30 C atoms, or a linear or branched aliphatic residue with 2 to 30 C atoms, which may be OH-substituted and may include up to 8 ether linkages.

5. Compositions according to Claim 4, wherein X in formula (VIII) stands for bisphenol A.

6. Compositions according to one of Claims 1 to 5, containing 4.7 to 6.6 parts by weight of component B and 10 to 12 parts by weight of component C.

7. Compositions according to one of Claims 1 to 6, wherein the talc according to component C exhibits a mean particle size (d₅₀) from 1.1 µm to 5 µm.

8. Compositions according to one of Claims 1 to 7, containing by way of component E at least one compound selected from the group consisting of Li₃[BO₃], Li[BO₂], Li[B(OH)₄], Na₃[B₃O₆], Na₂B₄O₇ · 4H₂O, Na₂B₄O₇ · 10H₂O, NaCaB₅O₉ · 6H₂O, K₃[B₃O₆], KB₅O₈ · 4H₂O, Mg₃[BO₃]₂, Ca[BO₃]₂, Ca[BO₂]₂, CaB₄O₇ · 4H₂O, Ca₂B₆O₁₁ · 5H₂O, Ca₂B₆O₁₁ · 7H₂O, Ca₄B₁₀O₁₉ · 7H₂O, Ca₅B₁₂O₂₃ · 9H₂O, Sr[BO₂]₂, Ba₃[B₃O₆]₂, Cu₃[BO₃]₂, Na₂B₄O₇ · 5H₂O, Na₂B₈O₁₃ · 4H₂O, BaB₂O₄ · H₂O, ZnB₂O₄ · 2H₂O, Zn₂B₄O₈ · 3H₂O, Zn₂B₆O₁₁ · 7H₂O, Zn₂B₆O₁₁ · 9H₂O, Zn₃B₄O₉ · 5H₂O, Zn[B₃O₃(OH)₅] · H₂O, Zn₃[BO₃]₂, Zn₂B₆O₁₁, Zn₄B₂O₇ · H₂O, Zn₂B₆O₁₁ · 3.5H₂O and ZnB₄O₇ · 4H₂O.

9. Compositions according to Claim 8, containing by way of component E Zn₄B₂O₇ · H₂O, Zn₂B₆O₁₁ · 3.5H₂O and/or ZnB₄O₇ · 4H₂O.

10. Compositions according to one of Claims 1 to 9, which are free from thermoplastic vinyl (co)polymers G.1 and polyalkylene terephthalates G.2.

11. Compositions according to one of Claims 1 to 10, containing lubricants, mould-release agents, nucleating agents, antistatic agents, stabilisers, dyestuffs and pigments and also fillers and reinforcing materials different from talc.

12. Use of the compositions according to one of Claims 1 to 11 for producing injection-moulded or thermoformed moulded articles.

13. Moulded article containing a composition according to one of Claims 1 to 11.

14. Moulded article according to Claim 13, **characterised in that** the moulded article is a part of a motor vehicle, of a bus, of a lorry, of a motor caravan, of a rail vehicle, of a watercraft or of some other vehicle or is a cover plate for the construction industry, a planar wall element, a partition wall, a wall-protection and edge-protection strip, a profile for electrical-installation channels, a cable conductor, a conductor-rail cover, a window and door profile, a furniture part or a part of a traffic sign.

15. Moulded article according to Claim 14, **characterised in that** the moulded article is a part of an aircraft.

## Revendications

1. Compositions contenant
A) 60-85 parties en poids de polycarbonate aromatique ramifié et/ou de polyestercarbonate aromatique ramifié,
B) 1-25 parties en poids de polymère greffé contenant une ou plusieurs bases de greffage choisies dans le groupe des caoutchoucs de silicone et des caoutchoucs de silicone-acrylate,
C) 10-15 parties en poids de talc,
D) 0,4-20 parties en poids d'ignifugeant contenant du phosphore,
E) 0,5-20 parties en poids d'un ou plusieurs composés inorganiques du bore,
et
F) 0-3 parties en poids d'agent anti-dégouttement.

2. Compositions selon la revendication 1 contenant un polycarbonate ou polyestercarbonate aromatique ramifié (composant A) qui contient des fonctionnalités amine comme groupes fonctionnels actifs.

3. Compositions selon la revendication 1 ou 2 où le polymère greffé (B) et constitué à partir de
B.1) 5 à 95 % en poids d'un ou plusieurs monomères vinyliques sur
B.2) 95 à 5 % en poids d'une ou plusieurs bases de greffage choisies dans le groupe des caoutchoucs de silicone (B.2.1) et des caoutchoucs de silicone-acrylate (B.2.2), où la base de greffage présente une température de transition vitreuse <10°C.

4. Compositions selon l'une des revendications 1 à 3 contenant un agent ignifugeant contenant du phosphore (D) de formule générale (VIII) 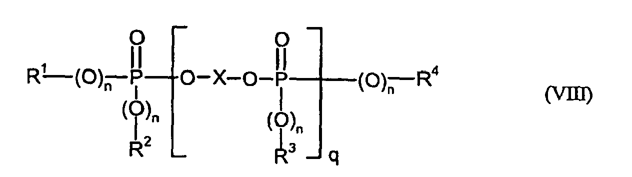 où
R¹, R², R³ et R⁴ représentent indépendamment les uns des autres dans chaque cas C₁ à C₈-alkyle éventuellement halogéné, C₅ à C₆-cycloalkyle, C₆ à C₂₀-aryle ou C₇ à C₁₂- aralkyle, éventuellement substitué dans chaque cas par alkyle, de préférence C₁ à C₁₄-alkyle, et/ou halogène, de préférence le chlore, le brome,
n représentent indépendamment les uns des autres 0 ou 1
q représente 0 à 30 et
X représente un groupement aromatique à un ou plusieurs noyaux ayant 6 à 30 atomes C, ou un groupement aliphatique linéaire ou ramifié ayant 2 à 30 atomes C, qui peut être substitué par OH et qui peut contenir jusqu'à 8 liaisons éther.

5. Compositions selon la revendication 4 où X dans la formule (VIII) représente le bisphénol A.

6. Compositions selon l'une des revendications 1 à 5 contenant 4,7 à 6,6 parties en poids de composant B et 10 à 12 parties en poids de composant C.

7. Compositions selon l'une des revendications 1 à 6, où le talc selon le composant C présente une taille de particule moyenne (d₅₀) de 1,1 à 5 µm.

8. Compositions selon l'une des revendications 1 à 7 contenant comme composant E au moins un composé choisi dans le groupe consistant en Li₃[BO₃], Li[BO₂], Li[B(OH)₄], Na₃[B₃O₆], Na₂B₄O₇ • 4 H₂O, Na₂B₄O₇ • 10 H₂O, NaCaB₅O₉ • 6 H₂O, K₃[B₃O₆], KB₅O₈ • 4 H₂O, Mg3[BO₃]₂, Ca[BO₃]₂, Ca[BO₂]₂, CaB₄O₇ • 4 H₂O, Ca₂B₆O₁₁ • 5 H₂O, Ca₂B₆O₁₁ • 7 H₂O, Ca₄B₁₀O₁₉ • 7 H₂O, Ca₅B₁₂O₂₃ • 9 H₂O, Sr[BO₂]₂, Ba₃[B₃O₆]₂, Cu₃[BO₃]₂, Na₂B₄O₇ • 5H₂O, Na₂B₈O₁₃ • 4H₂O, BaB₂O₄ • H₂O, ZnB₂O₄ • 2H₂O, Zn₂B₄O₈ • 3H₂O, Zn₂B₆O₁₁ • 7H₂O, Zn₂B₆O₁₁ • 9H₂O, Zn₃B₄O₉ • 5H₂O, Zn[B₃O₃(OH)₅] • H₂O, Zn₃[BO₃]₂, Zn₂B₆O₁₁, Zn₄B₂O₇ • H₂O, Zn₂B₆O₁₁ • 3,5 H₂O et ZnB₄O₇ • 4 H₂O.

9. Compositions selon la revendication 8 contenant comme composant E Zn₄B₂O₇ • H₂O, Zn₂B₆O₁₁ • 3,5 H₂O et/ou ZnB₄O₇ • 4 H₂O.

10. Compositions selon l'une des revendications 1 à 9 qui sont dépourvues de (co)polymères vinyliques thermoplastiques G.1 et de polyalkylènetéréphtalates G.2.

11. Compositions selon l'une des revendications 1 à 10 contenant des agents de glissement et de démoulage, des agents de nucléation, des antistatiques, des stabilisants, des colorants et des pigments ainsi que des substances de charge et de renforcement différentes du talc.

12. Utilisation des compositions selon l'une des revendications 1 à 11 pour la production de corps formés moulés par injection ou thermoformés.

13. Corps formé contenant une composition selon l'une des revendications 1 à 11.

14. Corps formé selon la revendication 13 **caractérisé en ce que** le corps formé est une partie d'un véhicule automobile, de bus, de camions, d'autocaravanes, d'un véhicule sur rail, d'un navire ou d'un autre véhicule ou est une plaque de couverture pour le secteur de la construction, un élément de paroi en nappe, une paroi de séparation, une bande de protection pour parois et arêtes, un profil pour des canaux d'installations électriques, un guide de câble, un couvercle de barre conductrice, un profil de fenêtre et de porte, une partie de meuble ou une partie d'un panneau de signalisation.

15. Corps formé selon la revendication 14, **caractérisé en ce que** le corps formé est une partie d'un aéronef.
